**Europäisches Patentamt**

**European Patent Office**

**Office européen des brevets**

(19)

(11) Veröffentlichungsnummer : **0 116 686
B1**

(12) **EUROPÄISCHE PATENTSCHRIFT**

(45) Veröffentlichungstag der Patentschriff :
02.12.87

(51) Int. Cl.⁴ : **B 08 B 15/00**, F 16 L 41/00

(21) Anmeldenummer : **83109657.3**

(22) Anmeldetag : **28.09.83**

(54) Vorrichtung zum Absaugen von Schadstoffen, insbesondere von Schadstoffen hoher Temperatur.

(30) Priorität : **18.02.83 DE 3305533**

(43) Veröffentlichungstag der Anmeldung :
**29.08.84 Patentblatt 84/35**

(45) Bekanntmachung des Hinweises auf die Patenterteilung : **02.12.87 Patentblatt 87/49**

(84) Benannte Vertragsstaaten :
**AT BE CH DE FR GB IT LI LU NL SE**

(56) Entgegenhaltungen :
**DE-A- 2 840 516
FR-A- 2 442 395
US-A- 3 195 562**

(73) Patentinhaber : **Ludscheidt, Horst
Westfälische Strasse 171
D-4600 Dortmund 12 (DE)**

(72) Erfinder : **Ludscheidt, Horst
Westfälische Strasse 171
D-4600 Dortmund 12 (DE)**

(74) Vertreter : **Patentanwälte Meinke und Dabringhaus
Dipl.-Ing. J. Meinke Dipl.-Ing. W. Dabringhaus
Westenhellweg 67
D-4600 Dortmund 1 (DE)**

## Beschreibung

Die Erfindung richtet sich auf eine Vorrichtung zum Absaugen von schadstoffen, insbesondere von Schadstoffen hoher Temperatur, in einem ortsfest verlegten, aus einzelnen Schüssen zusammengesetzten Saugkanal und mindestens einem am Saugkanal verfahrbaren Saugwagen mit einem Stutzen zum Anschluß von Absaugschläuchen od. dgl., wobei am Saugkanal vom Saugwagen von einer dichtenden in eine geöffnete Stellung bewegbar eine Saugklappe und ein vom Saugwagen in dieser Stellung auslösbares Schaltelement für ein den Saugkanal beaufschlagendes Gebläse angeordnet ist.

Aus der DE-A 28 40 516 des Anmelders die auch die Grundlage für den Oberbegriff des Anspruchs 1 bildet ist eine Vorrichtung bekannt, bei der ein Schlauchwagen an einem Saugrohr aus Kunststoff in getrennt aufgehängten Schienen geführt ist. In diesem Kunststoffrohr sind Ventilklappenelemente eingebaut, bei denen einseitig angelenkte Saugklappen durch Elemente des vorbeifahrenden Saugwagens nach innen in das Rohr eingeschwenkt werden. Durch einen federbeaufschlagten Stift rastet der Saugwagen an einem Halteelement ein und kann gleichzeitig ein Sauggebläse einschalten.

Die bekannte Vorrichtung weist bereits eine Reihe von Vorteilen gegenüber herkömmlichen Saugkanälen auf, die in der Regel längsgeschlitzt und mit Gummidichtungen od. dgl. ausgerüstet sind, wie dies z. B. aus der DE-A 19 24 266 oder FR-B-2 137 196 bekannt ist, da das Gebläse nur dann eingeschaltet wird, wenn der Saugwagen an einer vorbestimmten Arbeitsposition einrastet und damit das Sauggebläse anschaltet.

Gleichwohl weist das bekannte System noch einige Nachteile auf, insbesondere wird durch die einseitig angelenkten Saugklappen bei deren Einschwenken in den Kanal dessen Arbeitsquerschnitt sehr stark verringert. Auch kann nur in einer Richtung abgesaugt werden, da in der Gegenrichtung die eingeschwenkte Klappe dies im wesentlichen verhindert, d. h. es können nur ganz wenige Saugwagen an einem Kanal gleichzeitig in Arbeitsstellung sein. Auch kann mit den bekannten Systemen kein Abgas hoher Temperaturen abgesaugt werden, ohne daß nicht die Gefahr der Verbrennung, der Undichtigkeiten u. dgl. auftritt. Die bekannten Systeme sind auch an eine bestimmte Einbaulage fixiert, d. h. sie können nicht beliebig im Raum angeordnet werden, sie können auch nur in einzelnen vorbestimmten Querschnittsformen angeboten werden, d. h. eine Anpassung an unterschiedliche Systeme ist nicht möglich.

Aus der FR-A-2 442 395 ist es bekannt, Rohrleitungen mit auf diesen verfahrbaren Anschlußteilen als Metallprofil mit rechteckigem Querschnitt auszuführen, wobei diese Metallprofile die Laufschienen für Laufwagen bilden bzw. tragen. Die Laufwagen weisen dort einen Hebelmechanismus auf, der von Hand zu bedienen ist und über Bolzenelemente die verschlossenen Saugöffnungen in den entsprechenden Positionen öffnen kann. Diese bekannte Einrichtung ist konstruktiv vergleichsweise aufwendig, sie muß auch so verlegt sein, daß die benutzende Person die Saugwagen von Hand positionieren und bedienen kann.

Aufgabe der Erfindung ist die Schaffung einer Lösung, mit der die vorbeschriebenen Nachteile vermieden werden, mit der es aber insbesondere möglich ist, einen einfachen Bedienungskomfort unter Aufrechterhaltung hoher Saugleistungen zu erreichen, wobei der Querschnitt beliebig veränderbar, die Einbaulage unabhängig ist und wobei gleichzeitig eine Mehrzahl von Saugwagen eingesetzt werden können.

Mit einer Vorrichtung der eingangs bezeichneten Art wird diese Aufgabe gemäß der Erfindung dadurch gelöst, daß die Saugklappen als an zwei gegenüberliegenden, federführenden, ins Innere des Saugkanales ragenden Stiften, die an einer Kanalwand befestigt sind, geführten Scheiben ausgebildet sind.

Die Gestaltung der Saugklappe als an Stiften geführte, senkrecht zur Dichtebene abkippbare Saugklappe macht es möglich, daß der Querschnitt des Saugkanales durch die Lager der Saugklappe nicht beeinflußt wird, d. h. es kann unabhängig von der Einbaulage ein Gebläse an der einen oder anderen Seite des Saugkanales angeordnet sein, ohne daß die Funktion des Kanales gestört würde.

Als besonders zweckmäßige und einfache Steuerung der Abhebbewegung der Saugklappen ist vorgesehen, daß an den Saugklappen nach außen in die Bewegungsbahn des oder der Saugwagen ragende Führungselemente mit einer über Bereiche des Saugwagens sich abrollende Lauf- und Zentrierrollen angeordnet sind.

Grundsätzlich könnte sowohl die Saugklappe am Kanal als auch die Saugöffnung am Saugwagen exzentrisch angeordnet sein. Für den Gleichlauf und die gute Funktion ist aber nach der Erfindung vorgesehen, daß die Saugklappe einerseits und die Saugöffnung am Saugwagen andererseits mittensymmetrisch zur entsprechenden Kanalwand angeordnet sind und die Saugöffnung am Saugwagen von einer Laufschiene für die Laufrolle an der Saugklappe überbrückt ist.

Zur Lagefixierung des Saugwagens an der entsprechenden Arbeitsposition ist nach der Erfindung darüber hinaus vorgesehen, daß die Laufschiene in der Mitte der Saugöffnung mit einer Rastdelle zum Einrasten der Laufrolle der unterfahrenden Saugklappe ausgerüstet ist. Diese Maßnahme stellt eine sehr einfache und sehr wirkungsvolle Raste für den Saugwagen dar, da die Fixierkraft für den Laufwagen praktisch von den Fehlern der Saugklappe aufgebracht wird, die die Laufrolle in die entsprechende Delle am Laufwagen einrasten läßt.

Für eine variable Montage und die Fortbildung des vielfältigen Einsatzes ist nach der Erfindung darüber hinaus vorgesehen, daß die die Saugklappen tragende Kanalwand aus Einzelblechen kürzerer Länge zusammengesetzt ist, als die Länge eines Kanalschusses, wobei sich benachbarte Bleche dichtend bereichsweise übergreifen.

Weitere Merkmale, Einzelheiten und Vorteile der Erfindung ergeben sich aufgrund der nachfolgenden Beschreibung sowie anhand der Zeichnung. Diese zeigt in

Figur 1 eine Seitenansicht der Vorrichtung an einem Saugkanalschuß, teilweise geschnitten,

Figur 2 eine Aufsicht auf den Saugwagen gemäß Pfeil II-II in Fig. 1,

Figur 3 eine stirnseitige Aufsicht auf einen Saugkanal und in

Figur 4 eine Einbaumöglichkeit des Saugkanales in nach oben gerichteter, senkrechter Stellung in Aufsicht.

Die allgemein mit 1 bezeichnete Vorrichtung wird im dargestellten Beispiel von einem Kanalschuß 2 mit einem daran verfahrbaren Schlauchwagen 3 gebildet. Der aus mehreren Kanalschüssen 2, die nicht näher dargestellt sind, bestehende Saugkanal kann an eine Vakuumquelle, z. B. ein Saugebläse, angeschlossen sein. Er kann horizontal und vertikal verfahrbar sein u. dgl. mehr. Hierauf kommt es bei der vorliegenden Erfindung aber nicht an. Der Saugwagen 3 ist mit einem Saugstutzen 4 versehen, an den z. B. ein flexibler Saugschlauch 5 angeschlossen sein kann oder auch ein Saugarm u. dgl. mehr. Auch hierauf kommt es bei der vorliegenden Erfindung nicht an. Es sei lediglich noch festgestellt, daß an einem nach der Erfindung ausgebildeten Saugkanal eine Mehrzahl von Saugwagen 3 verfahrbar angeordnet sein kann.

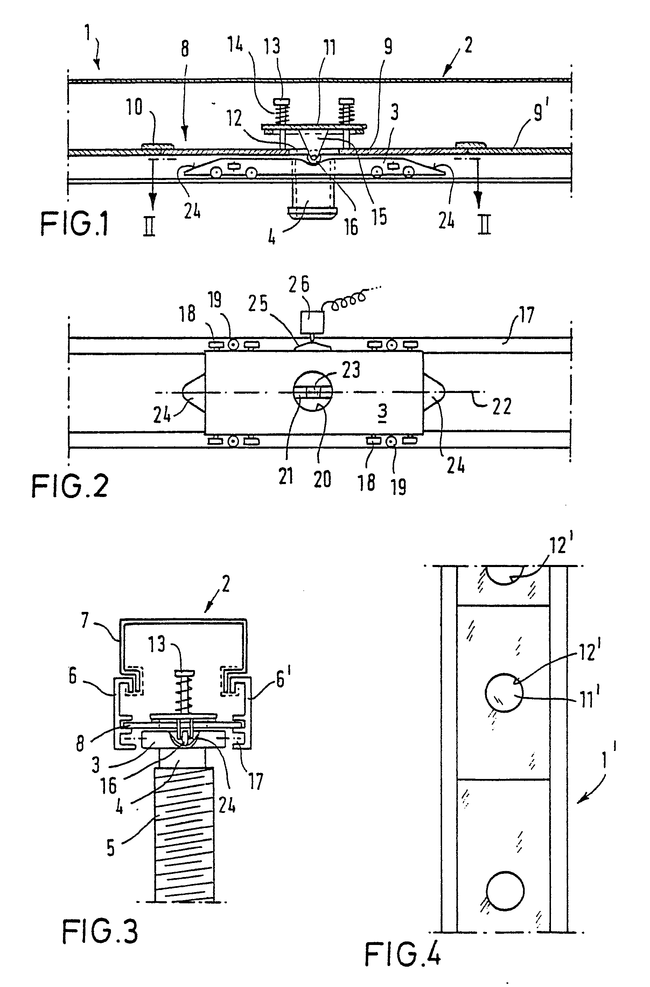

Jeder Saugkanalschuß 2 besteht, wie dies insbesondere aus Fig. 3 hervorgeht, aus zwei seitlichen Profilleisten 6 bzw. 6', aus einem die Restkanalwände bildenden Blech 7 und einer Kanalwand 8, welches im dargestellten Beispiel aus einer Mehrzahl von einzelnen Blechen 9 und 9' gebildet ist, die sich gasdicht überlappend aneinanderschließen, was durch die Zungen 10 in Fig. 1 angedeutet ist.

In einem Blech 9 der Kanalwand 8 ist eine von einer Saugklappe 11 verschlossene Saugöffnung 12 vorgesehen. Die Saugklappe 11 ist in Führungselementen 13 (z. B. zwei Stiften oder Stangen) geführt, die ins Innere des Saugkanales ragen und gleichzeitig zur Führung von Federn 14 dienen, die die Saugklappen 11 in dichtenden Eingriff mit der Kanalwand 8 zwingen. Nach außen durchsetzen Führungselemente 15 die Saugöffnungen 12. Zwischen den Führungselementen 15 ist eine Lauf- bzw. Zentrierrolle 16 angeordnet, deren Funktion weiter unten näher beschrieben ist.

Der Saugwagen 3 ist in Laufschienen 17 über Lauf- und Zentrierrollen 18 bzw. 19 geführt, wobei die Laufschienen 17 von den Seitenprofilen 6 bzw. 6' des Kanales 2 einstückig gebildet sind. Der Saugwagen 3 weist selbst ebenfalls eine Saugöffnung 20 auf, die mit dem Saugstutzen 4 fluchtet. Wie sich insbesondere aus Fig. 2 ergibt, ist die Saugöffnung 20 in einer Laufschiene 21 in der Mittelebene ausgerüstet, wobei die Mittelebene in Fig. 2 mit 22 bezeichnet ist. Diese Mittelebene bildet gleichzeitig auch die Mittelebene des Saugkanales 2. In der Laufschiene 21 ist eine Delle 23 eingebracht, in die die Laufrolle 16 an der Saugklappe 11 dann einrastet, wenn sich der Saugwagen direkt darunter befindet, wie dies in Fig. 1 dargestellt ist.

Um allerdings die normalerweise nach außen ragende Laufrolle 16 in die in Fig. 1 wiedergegebene Position zu bringen, ist der Laufwagen 3 im Bereich seiner Mittelebene 22 mit vorderen und hinteren Auflauframpen 24 versehen.

In diesem Bereich ist außen wenigstens an einer Seite des Saugwagens 3 ein Schaltnocken 25 angebracht, der einen Kontaktschalter 26 in der genau vorbestimmten Rastposition einschaltet, d. h. dann, wenn die Saugklappe 11 ins Innere des Saugkanales 2 abgehoben ist.

Die Wirkungsweise der Vorrichtung ist die folgende : Wird ein Saugwagen 3 am Kanal 2 in seinen Laufschienen 17 verfahren und kommt in den Bereich einer Saugklappe, so wird mit Hilfe der sich auf seinen Rampen 24 abrollenden Laufrollen 16 die Saugklappe 11 von einer dichtenden in eine nicht mehr dichtende Stellung angehoben und schließlich zur Vollöffnung gebracht, d. h. von der in Fig. 3 wiedergegebenen Stellung in die in Fig. 1 wiedergegebene Stellung. Die Saugöffnung 12 am Kanal 2 fluchtet dann exakt mit der Saugöffnung 20 am Saugwagen 3, so daß das im Inneren des Saugkanales herrschende Vakuum über den Saugstutzen 4 z. B. dem Laufschlauch 5 aufgeprägt werden kann. Gleichzeitig schaltet der Schalter 26, ausgelöst vom Nocken 25, das Sauggebläse ein, was zu einer hohen Energieersparnis führt, da das Sauggebläse dann und nur dann eingeschaltet wird, wenn ein Saugwagen in eine Arbeitsposition gelangt ist. Durch die Zusammensetzbarkeit der Kanalwand 8 aus unterschlichen Teilelementen ist es für den Benutzer möglich, sich die Saugöffnung 12 am Kanal 2 genau dort anzuordnen, wo er sie in seiner Werkstatt o. dgl. benötigt.

Erkennbar ist der Saugkanal an keine besondere Einbaulage gebunden. Die Kanalwand 8 kann, wie in Fig. 3 dargestellt, unten liegen, sie kann auch seitlich liegen, oben liegen oder aber auch horizontal ausgerichtet sein, wie dies in Fig. 4 angedeutet ist.

**Patentansprüche**

1. Vorrichtung zum Absaugen von Schadstoffen, insbesondere von Schadstoffen hoher Temperatur, in einem ortsfest verlegten, aus einzelnen Schüssen zusammengesetzten Saugkanal und mindestens einem am Saugkanal verfahrbaren Saugwagen mit einem Stutzen zum Anschluß von Absaugschläuchen od. dgl., wobei am Saugkanal vom Saugwagen von einer dichtenden in eine geöffnete Stellung bewegbar eine Saugklappe und ein vom Saugwagen in dieser Stellung auslösbares Schaltelement für ein den Saugkanal beaufschlagendes Gebläse angeordnet ist, dadurch gekennzeichnet, daß die Saugklappen (11) als an zwei gegenüberliegenden, federführenden, ins Innere des Saugkanales (2) ragenden Stiften (13), die an einer Kanalwand (8) befestigt sind, geführte Scheiben ausgebildet sind.

2. Vorrichtung nach Anspruch 1, dadurch gekennzeichnet, daß an den Saugklappen nach außen in die Bewegungsbahn des oder der Saugwagen (3) ragende Führungselemente (15) mit einer über Bereiche des Saugwagens (3) sich abrollende Lauf- und Zentrierrollen (16) angeordnet sind.

3. Vorrichtung nach Anspruch 1 oder 2, dadurch gekennzeichnet, daß die Saugklappe (11) einerseits und die Saugöffnung am Saugwagen andererseits mittensymmetrisch zur entsprechenden Kanalwand angeordnet sind und die Saugöffnung (20) am Saugwagen (3) von einer Laufschiene (21) für die Laufrolle (16) an der Saugklappe (11) überbrückt ist.

4. Vorrichtung nach Anspruch 3, dadurch gekennzeichnet, daß die Laufschiene (21) in der Mitte der Saugöffnung (20) mit einer Rastdelle (23) zum Einrasten der Laufrolle (16) der unterfahrenden Saugklappe (11) ausgerüstet ist.

5. Vorrichtung nach einem der vorangehenden Ansprüche, dadurch gekennzeichnet, daß die Saugklappen (11) tragende Kanalwand (8) aus Einzelblechen (9, 9') kürzerer Länge zusammengesetzt ist, als die Länge eines Kanalschusses (2), wobei sich benachbarte Bleche (9, 9') dichtend bereichsweise übergreifen.

## Claims

1. Apparatus for sucking away noxious substances, in particular high-temperature noxious substances, in a suction passage which is laid in a fixed location and which is composed of individual passage sections, and at least one suction carriage which is movable on the suction passage and having a connection for connecting suction tubes or the like, wherein a suction flap is arranged on the suction passage movably by the suction carriage from a sealing position into an opened position and a switch element which can be triggered by the suction carriage in said position, for a fan for acting on the suction passage, is arranged on the suction passage, characterised in that the suction flaps (11) are in the form of discs which are guided on two oppositely disposed spring-carrying pins (13) which project into the interior of the suction passage (2) and which are fixed to a passage wall (8).

2. Apparatus according to claim 1 characterised in that arranged on the suction flaps are guide elements (15) which project outwardly into the path of movement of the suction carriage or carriages (3) with a running and centering roller (16) which rolls over regions of the suction carriage (3).

3. Apparatus according to claim 1 or claim 2 characterised in that the suction flap (11) on the one hand and the suction opening on the suction carriage on the other hand are arranged centrosymmetrically with respect to the corresponding passage wall and the suction opening (20) on the suction carriage (3) is bridged over by a rail (21) for the roller (16) on the suction flap (11).

4. Apparatus according to claim 3 characterised in that in the middle of the suction opening (20), the rail (21) is provided with a retaining dip (23) for retaining engagement therein of the roller (16) of the suction flap (11), beneath which it passes.

5. Apparatus according to one of the preceding claims characterised in that the passage wall (8) carrying suction flaps (11) is composed of individual plates (9, 9') of shorter length than the length of a passage section (2), with adjacent plates (9, 9') sealingly engaging over each other in a region-wise manner.

## Revendications

1. Dispositif pour aspirer des produits nocifs, en particulier ceux de température élevée, dans un canal d'aspiration constitué par l'assemblage d'éléments individuels et avec au moins un chariot d'aspiration pouvant se déplacer dans le canal d'aspiration, comprenant une tubulure de raccord pour des tuyaux d'aspiration ou analogues, un clapet d'aspiration pouvant être déplacé dans le canal d'aspiration par le chariot d'aspiration entre une position de fermeture étanche et une position ouverte, et un élément de commutation qui peut être déclenché par le chariot d'aspiration dans cette position étant prévu pour une soufflerie agissant dans le canal d'aspiration, caractérisé en ce que les clapets d'aspiration (11) sont constitués sous forme de disques guidés par deux tiges (13) opposées, à guidage élastique et faisant saillie à l'intérieur du canal d'aspiration (2), et fixées à une paroi (8) du canal.

2. Dispositif selon la revendication 2, caractérisé en ce que des éléments de guidage (15) sont disposés sur les clapets d'aspiration, faisant saillie vers l'extérieur dans la piste où se déplace le ou les chariots d'aspiration (3) et comprenant des galets de roulement et de centrage roulant sur des régions du chariot d'aspiration (3).

3. Dispositif selon la revendication 1 ou 2, caractérisé en ce que le clapet d'aspiration (11) d'une part et l'ouverture d'aspiration du chariot d'aspiration d'autre part sont disposés de façon symétrique et centralement par rapport à la paroi correspondante du canal, et l'ouverture d'aspiration (20) du chariot d'aspiration (3) est recouverte par un rail de roulement (21) destiné au galet (16) du clapet d'aspiration (11).

4. Dispositif selon la revendication 3, caractérisé en ce que le rail de roulement (21) est équipé au milieu de l'ouverture d'aspiration d'une gorge d'arrêt (23) destinée à l'enclenchement du galet de roulement (16) du clapet d'aspiration (11) au-dessous duquel elle passe.

5. Dispositif selon l'une quelconque des revendications précédentes, caractérisé en ce que la paroi (8) du canal qui supporte les clapets d'aspiration (11) est constituée par l'assemblage de tôles individuelles (9, 9') de plus courte longueur que la longueur d'une section (2) de canal, les tôles voisines (9, 9') se chevauchant localement de façon étanche.

FIG.1

FIG.2

FIG.3

FIG.4